# EUROPEAN PATENT SPECIFICATION

(11) **EP 2 077 194 B1**
(45) Date of publication and mention of the grant of the patent: **04.01.2012**
(21) Application number: 07830312.0
(22) Date of filing: 22.10.2007
(51) Int. Cl.: B60C 15/06, B60C 15/00

(54) **PNEUMATIC TIRE**
LUFTREIFEN
PNEUMATIQUE

(30) Priority: 20.10.2006 JP 2006286048
(43) Date of publication of application: 08.07.2009
(73) Proprietor: Bridgestone Corporation, Tokyo 104-8340 (JP)
(72) Inventor: MIYAZONO, Toshiya c/o BRIDGESTONE CORPORATION, Technical Center, Kodaira-shi, Tokyo 1878531 (JP)
(74) Representative: Oxley, Robin John George
(86) International application number: PCT/JP2007/070578
(87) International publication number: WO 2008/047938

(56) References cited:
- JP-A- 62 001 606
- JP-A- 2001 191 758
- JP-A- 2002 500 122
- JP-A- 2002 500 123
- JP-A- 2006 175 955
- JP-A- 2006 188 147

## Description

### Technical Field

The present invention relates to a pneumatic tire having a carcass formed of at least one ply constituted of: a main body extending in a toroidal shape over respective portions including a pair of bead portions having bead cores embedded therein, a pair of sidewall portions extending on the outer side in the tire radial direction from the bead portions, and a tread portion extending over the respective sidewall portions; and a folded portion extending from the main body and being folded around the respective bead cores from the inner side toward the outer side in the tire widthwise direction, to enhance durability of the bead portions.

### Prior Art

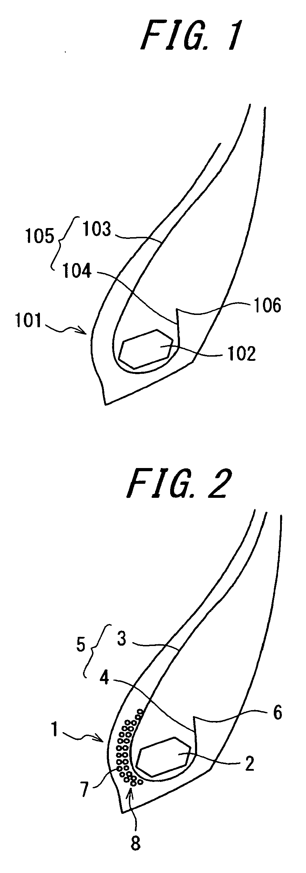

In the conventional pneumatic tire, as shown in Fig. 1, at least one carcass 105, extending in a toroidal shape from a tread portion (not shown) to respective bead portions 101 via respective sidewall portions, is generally folded around respective bead cores 102 embedded in respective bead portions 101 from the inner side toward the outer side in the tire widthwise direction to be held thereon. In such a structure of the bead portions as described above, when a tire assembled with a rim is rotated with a load applied thereon, the respective bead portions 101 on the outer side in the tire radial direction of rim flanges tend to collapse-deform repeatedly toward the outer side in the tire widthwise direction. Due to this, stress is concentrated at a carcass portion which is collapse-deformed and a folded end 106, whereby cracks are generated between rubber and a carcass 105 and thus the carcass portion which is collapse-deformed and the folded end 106 tend to be easily separated from the rubber. Further, when the tire is rotated with a load applied thereon, a tensile force is exerted on the carcass 105 toward the outer side in the tire radial direction, whereby if the engagement force acting on the bead portions 102 is not sufficient, the carcass 105 tends to be easily pulled out of the bead portions 102.

Therefore, in order to prevent the folded end from being separated from rubber as described above, JP 2001-191758, for example, proposes providing a reinforcing layer for enhancing rigidity at a region of a bead portion which tends to collapse-deform when a tire is rotated with a load applied thereon and receive concentrated stress, in order to suppress collapse-deformation of the bead portion and thus prevent separation of the carcass from the rubber from occurring. Further, JP 09-156310 proposes winding a carcass around each bead core to dispose a folded end portion of the carcass in a region where a bead portion is deformed relatively little, so that cracks are prevented from being generated from the folded end and the carcass wound around the bead core exerts a engagement force against a tensile force on the outer side in the tire radial direction of the carcass when the tire is rotated with a load applied thereon, thereby making it difficult for the bead portions to be pulled out of the carcass.

### Disclosure of the Invention

In the invention disclosed in JP 2001-191758, the collapse-deformation of the bead portion is suppressed such that separation of the carcass from rubber at the bead portion is effectively prevented. Further, the applicant contrived an invention in which a engagement force which resists a tensile force on the outer side in the tire radial direction of a carcass is further enhanced when, in particular, a tire for heavy load in which a relatively high tensile force acts on a carcass is used. However, in the invention disclosed in JP 09-156310, although generation of cracks from a folded end portion of the carcass can be prevented, separation still occurs at a collapse-deformed carcass portion and a engagement force may be still insufficient, in particular, in a tire for heavy load.

The present invention aims at solving such problems as described above. An object of the present invention is to provide a pneumatic tire in which the structure of a reinforcing layer is optimized to prevent a carcass from being separated from rubber and reliably prevent the carcass from being pulled out of a bead portion, thereby improving durability of the bead portion.

In order to achieve the aforementioned object, the present invention provides a pneumatic tire having a carcass formed of at least one ply constituted of: a main body extending in a toroidal shape over respective portions including a pair of bead portions having bead cores embedded therein, a pair of sidewall portions extending on the outer side in the tire radial direction from the bead portions, and a tread portion extending over the respective sidewall portions; and a folded portion extending from the main body and being folded around the respective bead cores from the inner side toward the outer side in the tire widthwise direction, the tire comprising at least two reinforcing layers formed of cords extending substantially in the tire circumferential direction and rubber coating thereon, the reinforcing layers being disposed along the inner face of the carcass on the inner side in the tire widthwise direction of the bead core. Due to the structure described above, it is possible to suppress collapse-deformation at the bead portion, prevent the carcass from being separated from the rubber and dispose the carcass such that the carcass is interposed between each reinforcing layer and each bead core, thereby enhancing a engagement force which resists a tensile force toward the outer side in the tire radial direction of the carcass and thus significantly reducing a possibility that the carcass is pulled out of the vicinity of each bead portion. In the present specification, "extending substantially in the tire circumferential direction" represents, when a reinforcing layer is formed by continuously winding a single cord in a spiral shape, extending with inclination of a very small angle, which inclination inevitably occurs in actual production.

Further, the cords constituting the reinforcing layers are preferably metal cords or organic fiber cords.

Yet further, the end portion on the outer side in the tire radial direction of each reinforcing layer is preferably positioned on the outer side in the tire radial direction of the outermost end in the tire radial direction of the bead core. In the present specification, "the outermost end in the tire radial direction of a bead core" represents the outermost position in the tire radial direction of a bead core.

Yet further, the end portion on the inner side in the tire radial direction of each reinforcing layer is preferably positioned on the inner side in the tire radial direction of the innermost end in the tire radial direction of the bead core. In the present specification, "the innermost end in the tire radial direction of a bead core" represents the innermost position in the tire radial direction of the bead core.

The reinforcing layer preferably passes on a position on the inner side in the tire radial direction of the bead core. Yet further, the end portion on the inner side in the tire radial direction of the reinforcing layer is preferably positioned on the outer side in the tire radial direction of the folded end of the carcass.

The folded end of the folded portion is preferably distanced from the bead core. -

Further, it is preferable that the entire part of the folded portion of the carcass is folded along the bead core. It is further preferable that this folded portion of the carcass is plastically folded.

Yet further, it is preferable that the adjacent two reinforcing layers are disposed such that the two reinforcing layers are offset with each other. In the present specification, a recitation that "the adjacent two reinforcing layers are offset with each other" represents that the center positions of cords of one layer of the adjacent reinforcing layers do not coexist with the center positions of cords of the other layer on the same imaginary line normal to a shared tangent of the reinforcing layers.

Yet further, it is preferable that the driving density of cords in each reinforcing layer is relatively small at the end portion on the outer side in the tire radial direction thereof, as compared with the cord driving density at other portions of the reinforcing layer.

Yet further, it is preferable that the driving density of cords in each reinforcing layer gradually increases from the end portion on the outer side in the tire radial direction of the reinforcing portion toward a position on the inner side in the tire widthwise direction at the innermost end in the tire widthwise direction of the bead core. In the present specification, "the innermost end in the tire widthwise direction of a bead core" represents the innermost position in the tire widthwise direction of the bead core.

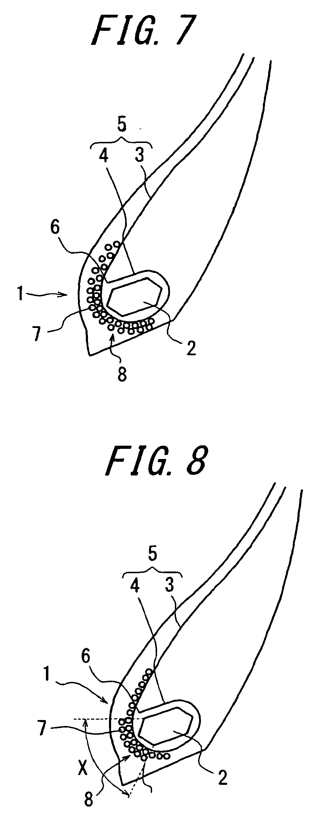

Yet further, it is preferable that the reinforcing layer is provided such that two reinforcing layers are disposed in a section where the bead core is present, while a single reinforcing layer is disposed in other sections. In the present specification, "a section where the bead core is present" is a section where an effect of preventing the carcass from being pulled out the bead portion by interposing the carcass between the reinforcing layer and the bead core is obtained in a particularly effective manner, which is a section as indicated "X" in Fig. 8.

According to the present invention, by providing a bead portion with plural reinforcing layers with appropriate arrangements, there can be provided a pneumatic tire in which a carcass is prevented from being separated from rubber and also reliably prevented from pulled out of the bead portion, whereby durability of the bead portion is significantly improved.

### Brief Description of the Drawings

Fig. 1 is a sectional view in the tire widthwise direction of a tire having the conventional structure of a bead portion.
Fig. 2 is a sectional view in the tire widthwise direction of an example of a tire having a structure of a bead portion according to the present invention.
Fig. 3 is a sectional view in the tire widthwise direction of an example of a tire having a structure of a bead portion according to the present invention.
Fig. 4 is a sectional view in the tire widthwise direction of an example of a tire having a structure of a bead portion according to the present invention.
Fig. 5 is a sectional view in the tire widthwise direction of an example of a tire having a structure of a bead portion according to the present invention.
Fig. 6 is a sectional view in the tire widthwise direction of an example of a tire having a structure of a bead portion according to the present invention.
Fig. 7 is a sectional view in the tire widthwise direction of an example of a tire having a structure of a bead portion according to the present invention.
Fig. 8 is a sectional view in the tire widthwise direction of an example of a tire having a structure of a bead portion according to the present invention.
Fig. 9 is a sectional view in the tire widthwise direction of an example of a tire having a structure of a bead portion according to the present invention.
Fig. 10 is a sectional view in the tire widthwise direction of an example of a tire having a structure of a bead portion according to the present invention.

### Explanation of Reference Numerals

- 1: Bead portion
- 2: Bead core
- 3: Main body
- 4: Folded portion
- 5: Carcass
- 6: Folded end
- 7: Cord
- 8: Reinforcing layer
- X: Section where bead core is present

### Best Mode for carrying out the Invention

Hereinafter, an embodiment of the present invention will be described with reference to the drawings. Fig. 2 is a sectional view in the tire widthwise direction of a bead portion of a pneumatic tire according to the present invention (which will be referred to as "a tire" hereinafter).

A bead portion 1 of the tire as shown in Fig. 2 includes a carcass 5 formed of at least one ply constituted of: a main body 3 extending in a toroidal shape over respective portions including a pair of bead portions 1 having bead cores 2 embedded therein (only one of the bead portions is shown in the drawings), a pair of sidewall portions extending on the outer side in the tire radial direction from the bead portions, and a tread portion extending over the respective sidewall portions; and a folded portion 4 extending from the main body 3 and being folded around the respective bead core 2 from the inner side toward the outer side in the tire widthwise direction. In the present embodiment, a folded end 6 of the folded portion 4 is disposed such that the folded end 6 is distanced from the bead core 2. Further, a dual layered reinforcing layer 8, formed of cords 7 extending substantially along the tire circumferential direction and coating rubber provided thereon, is disposed along the inner face of the carcass 5 on the inner side in the tire widthwise direction of the bead core 2. In the present invention, the dual layered reinforcing layer 8 is disposed at a portion of the tire which portion tends to collapse-deform when the tire is rotated with a load applied thereon. Accordingly, collapse-deformation is suppressed and separation of the carcass 5 from the rubber is prevented. Further, since the reinforcing layers 8 are disposed such that the carcass 5 is interposed between the bead core 2 and the reinforcing layers 8, the force by which the carcass 5 is engaged with or held at the bead portion 1 is enhanced by this interposing effect, whereby it is possible to reliably prevent the carcass 5 from being pulled out of the bead portion 1. In a case in which the reinforcing layer 5 (8) easily moves when the tire is rotated with a load thereon, the carcass 5 between the reinforcing layer 8 and the bead core 2 also moves as the reinforcing layer 5 (8) moves when the tire is rotated with a load applied thereon. As a result, the carcass 5 is not sufficiently fixed, whereby the engagement force by which the carcass 5 is engaged at the bead portion, due to the carcass 5 being interposed by the bead core 2 and the reinforcing layer 8, is weakened and pulling-off of the carcass 5 from the bead portion 1 cannot be suppressed in an effective manner. In the aforementioned structure of the present invention, since the reinforcing layer 8 has a dual layer structure, the cords 7 of one layer of the adjacent reinforcing layers 8 and the cords 7 of the other layer restrain each other's movements, whereby not only collapse-deformation in tire rotation with a load applied thereon is well suppressed but also the carcass 5 is firmly interposed between the movement-restrained reinforcing layers 8 and the bead core 2. As a result, the engagement force by which the carcass 5 is engaged at the bead portion 1 is sufficiently retained and thus the carcass 5 is effectively prevented from being pulled out of the bead portion. Further, the cords 7 of the reinforcing layers 8 and cords of the carcass 5 are disposed adjacent such that the respective cords intersect each other. Accordingly, when a tensile force is exerted on the carcass 5, the cords of the carcass 5 are hooked by the cords 7 of the reinforcing layers 8, whereby the engagement force against the carcass 5 and thus the effect of preventing the carcass 5 from being pulled out of the bead portion is enhanced. Since relatively strong tensile force is exerted on the carcass 5 of a tire for heavy load, it is particularly advantageous to employ the aforementioned structure of the present invention to such a tire.

Further, the cords 7 constituting the reinforcing layers 8 are preferably metal cords or organic fiber cords, depending on the required weight, rigidity and the like. If the cords 7 having sufficient flexibility and strength, which may vary depending on the types of the vehicle, are not used, separation of the carcass 5 from the rubber is more likely to occur because collapse-deformation can no longer be suppressed in a sufficient manner when the tire is rotated with a load applied thereon and the carcass 5 may not be reliably prevented from being pulled out of the bead portion 1 because the engagement force by which the carcass 5 is engaged at the bead portion 1 is no longer sufficiently enhanced. Specifically, the cords 7 constituting the reinforcing layer 8 in a tire for a passenger vehicle do not require so high rigidity and it is rather more important that such a tire should have a relatively light weight. Therefore, a tire for a passenger vehicle preferably employs organic fiber cords having, in general, characteristics that rigidity thereof is not so high but weight per unit volume thereof is relatively small. In contrast, the cords 7 constituting the reinforcing layers 8 in a tire for heavy load in use for a bus, a truck, an agricultural machine, construction vehicle and the like require relatively high rigidity and thus preferably employ metal cords having, in general, characteristics that rigidity thereof is relatively high and weight per unit volume thereof is relatively large. Preferable examples of the metal cords include a steel cord formed of a monofilament, a steel cord formed of intertwined plural filaments, and the like. Preferable examples of the organic fiber cords include a rayon cord, an aramid (aromatic polyamid) cord, and the like. Dimensions of the cords 7 may be changed as required, in accordance with types of the rubber constituting the bead portion 1, rigidity, a sectional shape and the like of the bead core 2, etc.

Yet further, it is preferable that the end portions on the outer side in the tire radial direction of the reinforcing layers 8 are positioned on the outer side in the tire radial direction of the outermost end in the radial direction of the bead core 2. In a case in which the end portions on the outer side in the tire radial direction of the reinforcing layers 8 are positioned on the inner side in the tire radial direction of the outermost end in the radial direction of the bead core 2, collapse-deformation in the vicinity of the outermost end in the tire radial direction of the bead core 2 cannot be prevented in a satisfactory manner, whereby stress is concentrated at the outermost end in the tire radial direction of the bead core 2 during collapse-deformation and separation of the bead core 2 from the rubber is more likely to occur.

Yet further, it is preferable that the end portions on the inner side in the tire radial direction of the reinforcing layers 8 are positioned on the inner side in the tire radial direction of the innermost end in the radial direction of the bead core 2. Since the end portions on the inner side in the tire radial direction of the reinforcing layers 8 are positioned on the inner side in the tire radial direction of the innermost end in the radial direction of the bead core 2, the area where the carcass 5 is interposed by the bead core 2 and the reinforcing layer 8 is increased, whereby the effect of interposing the carcass 5 between the bead core 2 and the reinforcing layer 8 is enhanced and the carcass is less likely to be pulled out.

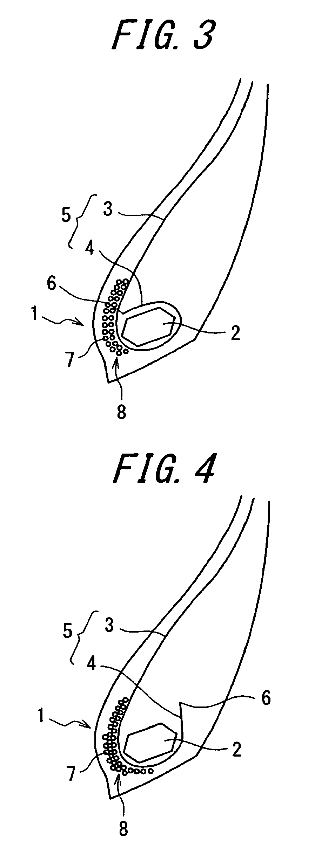

Yet further, as shown in Fig. 4, it is preferable that the reinforcing layers 8 pass on a position on the inner side in the tire radial direction of the bead core, i.e. pass through a region where the reinforcing layers 8 are interposed by the bead core 2 and a rim flange when the reinforcing layers 8 are mounted to the bead portion. The above-described structure is preferable because, by making at least a part of the reinforcing layers 8 pass through the region where the reinforcing layer(s) 8 is interposed between the rim flange and the bead core 2, the reinforcing layers 8 are firmly interposed between the rim flange and the bead core 2. Since the firmly-interposed region of the reinforcing layer interposes the carcass 5 between itself and the bead core 2, the engagement force by which the carcass 5 is engaged at the bead portion 1 is enhanced, whereby the carcass 5 is less likely to be pulled out of the bead portion 1. Further, it is preferable that the reinforcing layers 8 pass on a position on the inner side in the tire radial direction of the bead core 2 and further extend along the carcass such that the end thus extended, i.e. the end on the inner side in the tire radial direction, of the reinforcing layers 8 is positioned on the outer side in the tire radial direction of the folded end 6 of the carcass 5. In a structure in which the reinforcing layers 8 pass on the position on the inner side in the tire radial direction of the bead core 2 and further extend along the carcass such that the end thus extended, i.e. the end on the inner side in the tire radial direction, of the reinforcing layers 8 is positioned on the outer side in the tire radial direction of the folded end 6 of the carcass 5, stress is less likely to concentrate at the folded end 6 of the carcass 5, whereby cracks between the folded end 6 and the rubber are less likely to be generated and separation of the carcass 5 and the rubber is more likely to be prevented.

Yet further, in the tire having other structures according to the present invention to prevent the carcass 5 from being pulled out of the bead portion in a satisfactory manner, it is preferable, as shown in Fig. 2, that the folded end 6 of the folded portion 4 is distanced from the bead core 2. If the carcass 5 were to be wound around the bead core 2, the folded end 6 of the carcass 5 would be disposed in a region where the bead portion 1 is relatively little strained and thus crack generation starting from the folded end 6 might be prevented. Further, since the carcass 5 wound around the bead core 2 would exert engagement force against tensile force toward the outer side in the tire radial direction of the carcass 5 when the tire is rotated with a load applied thereon, the carcass 5 might be less likely to be pulled out of the bead portion 1. However, since the process of winding the carcass 5 around the bead core 2 includes folding the folded end 6 along the bead core 2 by a longer length than the present invention, the process requires longer time to effect the folding operation and more complicated production steps, as compared with the present invention where the carcass 5 is not wound around the bead core 2, whereby significant time and labor are required up to vulcanization molding, which runs counter to energy and labor saving and marring productivity of tires.

When it is found out that a tire having other structures according to the present invention could be further improved in terms of more reliably preventing the carcass 5 from being pulled out of the bead portion, as shown in Fig. 3, it is preferable that the entire part of the folded portion 4 of the carcass 5 is folded along the bead core 2. In the above-described structure in which the entire part of the folded portion 4 is folded along the bead core 2, in case the bead portion 1 is collapse-deformed on the outer side in the tire widthwise direction when the tire assembled with a rim is rotated with a load applied thereon, stress is less likely to concentrate at the folded end 6 and cracks are less likely to be generated between the rubber and the folded end 6, whereby the carcass 5 is less likely to be separated from the rubber. Further, in the above-described structure, since engagement force against tensile force is enhanced due to somehow winding the carcass 5 around the bead core 2, the carcass 5 is less likely to be pulled out of the bead portion 1. Further, in the structure described above, it is preferable that the folded portion 4 of the carcass 5 is plastically folded along the bead core 2. As a result of plastically folding, as compared with elastically folding, the folded portion 4 of the carcass 5 takes on a shape well corresponding to the bead core 2 and the overall clearance between the folded portion 4 of the carcass 5 and the bead core 2 is relatively small, whereby the folded portion 4 of the carcass 5 is firmly engaged with the bead core 2 and thus the engagement force resisting tensile force toward the outer side in the tire radial direction of the carcass 5 is further improved, which further prevents the carcass 5 from being pulled out of the bead portion 1.

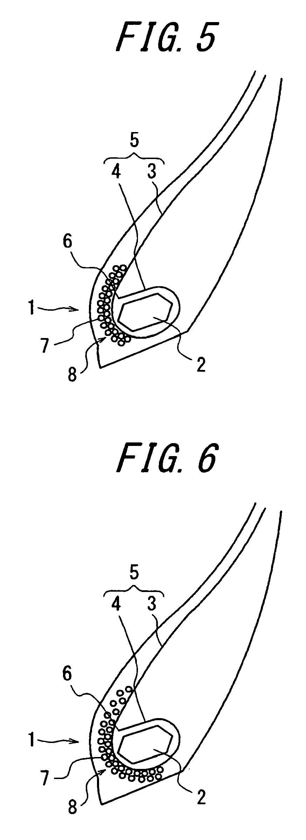

Further, as shown in Fig. 5, it is preferable that the adjacent two reinforcing layers 8 are disposed such that these reinforcing layers are offset with each other. Specifically, it is preferable that the center positions of cords 7 of one layer of the adjacent reinforcing layers 8 do not coexist with the center positions of cords 7 of the other layer on the same imaginary line normal to a shared tangent of the reinforcing layers 8. In a case in which at least one of the center positions of cords 7 of one layer of the adjacent reinforcing layers 8 coexists with at least one of the center positions of cords 7 of the other layer on the same imaginary line normal to a shared tangent of the reinforcing layers 8, the distribution of the cords 7 is not sufficiently dense and the reinforcing layers 8 can no longer retain sufficient rigidity required for preventing collapse deformation of the bead portion 1, whereby separation of the carcass 5 from the rubber and pulling-off of the carcass 5 are more likely to occur. Further, in a case in which the adjacent two reinforcing layers 8 are disposed offset from each other but the distance between the two layers is too large, sufficient rigidity of the bead portion 1 cannot be retained, either, whereby the effect of suppressing separation of the carcass 5 from the rubber and pulling-off the carcass 5 may deteriorate.

Yet further, as shown in Fig. 6, it is preferable that the driving density of the cords 7 of the reinforcing layers 8 at the end portion on the outer side in the tire radial direction thereof is relatively small, as compared with that at other portions thereof. In the above-described structure in which at least a carcass portion on the inner side in the tire widthwise direction of the bead core 2 is interposed by a portion of the reinforcing layers having cords 7 of relatively large cord driving density and the bead core 2, since a force pushing the bead portion 1 from the inner side toward the outer side in the tire widthwise direction is exerted due to the internal pressure of the tire, the carcass 5 is firmly interposed and thus the carcass 5 is reliably prevented from being pulled out of the bead portion. Regarding the cords 7 on the outer side in the tire radial direction of the reinforcing layers 8, since the cord more on the outer side in the tire radial direction is farther distanced from the bead core 2, provision of the reinforcing layers 8 in such a position distanced from the bead core 2 brings only a minor interposing effect, whereby decreasing the driving density of the cords 7 at the end on the outer side in the tire radial direction of the reinforcing layer 8 does not so significantly affect the interposing the carcass 5 between the reinforcing layer 8 and the bead core 2. In short, concentration of stress on the carcass 5 at the end portion on the outer side in the tire radial direction of the reinforcing layer 8 can be suppressed by decreasing the driving density of the cords 7 at the end portion on the outer side in the tire radial direction of the reinforcing layer 8, still enhancing durability of the bead portion 1 and also suppressing weight increase thereof. In the structure described above, within the scope of the aforementioned structure, the driving density of the cords 7 of the reinforcing layers 8 may be uneven at at least a part of the reinforcing layers 8. Further, although not shown in the drawings, the cord driving density of one layer and that of the other layer, of the two reinforcing layers, may be made different from each other. In this case, it is preferable that the cord driving density of the one reinforcing layer 8 disposed on the carcass side, which layer causes a greater interposing effect with respect to the bead portion 1 than the other layer, is made larger than that of the other layer.

Yet further, as shown in Fig. 7, it is preferable that the driving density of the cords of the reinforcing layers 8 gradually increases from the end on the outer side in the tire radial direction thereof toward a position thereof on the inner side in the tire widthwise direction at the innermost end in the tire widthwise direction of the bead core 2. The closer the reinforcing layers 8 is to the position thereof on the inner side in the tire widthwise direction at the innermost end in the tire widthwise direction of the bead core 2, the smaller the distance between the bead core 2 and the reinforcing layers 8 and the more firmly the carcass 5 is interposed therebetween. Therefore, by gradually increasing the driving density of the cords 7 of the reinforcing layers 8 toward a position on the inner side in the tire widthwise direction thereof at the innermost end in the tire widthwise direction of the bead core 2, the carcass 5 can be firmly interposed by the portion of the reinforcing layer having cords 7 of relatively large cord driving density and the bead core 2, whereby the carcass 5 can be effectively prevented from being pulled out of the bead portion 1. Further, since the cords 7 positioned more distanced on the outer side in the tire radial direction of the reinforcing layers 8 has smaller cord driving density in the structure described above, concentration of stress on the carcass 5 can be suppressed, while still enhancing durability of the bead portion 1 and also suppressing weight increase thereof.

Yet further, as shown in Fig. 8, it is preferable that when viewed in the tire widthwise direction the dual or two reinforcing layers 8 exist at a section X where the bead core 2 is present, while a single reinforcing layer is provided at other sections. To sufficiently retain engagement force by which the carcass 5 is held at the bead portion 1 and thus effectively prevent the carcass 5 from being pulled out of the bead portion 1, it suffices to provide the two reinforcing layers 8 only at the section X where the carcass 5 is interposed by the reinforcing layer and the bead core 2, because a force pushing the bead portion 1 from the inner side toward the outer side in the tire widthwise direction is exerted due to the internal pressure of the tire. Further, since a single reinforcing layer 5 (8) is provided at the sections other than the aforementioned section X, the engagement exerted on the carcass 5 is reduced stepwise, whereby stress is less likely to concentrate on the end portion of the reinforcing layers 8 and it is possible to enhance durability of the bead portion 1 and also suppress weight increase thereof , while suppressing concentration of stress on the carcass 5.

The shape of the bead core 2 may be modified to various shapes including an ellipsoidal shape and other polygonal shapes. The foregoing descriptions show only a part of possible embodiments of the present invention, and the aforementioned structures may be combined, interchanged or subjected to various modifications unless such modifications digress from the sprit of the present invention.

### Examples

Next, tires according to the present invention having the bead portions as shown in Figs. 2-5, 9 and 10 (Examples tires) and tires having the conventional bead portions (Conventional tires) were prepared and the performances thereof were evaluated, respectively. Details thereof will be described below.

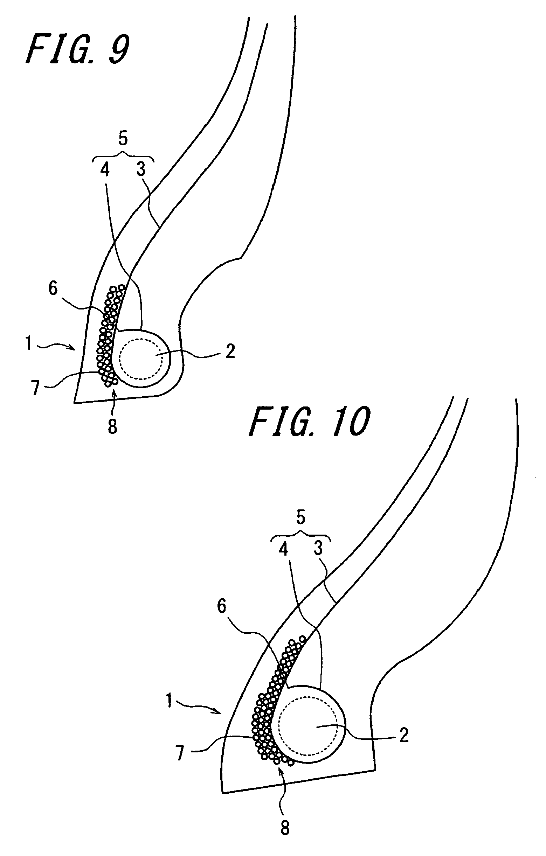

The tires of Examples 1 to 5 are tires for bus/truck having bead portions structured as shown in Figs. 2-5 and 9, respectively. The tire of Example 6 is a tire for construction vehicle having a bead portion structured as shown in Fig. 10. The tires of Conventional Examples 1 to 5 have basically the same structures as the tires of Examples 1 to 5, except that Conventional Example 1-5 tires have only a single reinforcing layer 8 (not shown in the drawings). Further, the tire of Conventional Example 6 has basically the same structure as the tire of Example 6, except that Conventional Example 6 tire has no reinforcing layer 8 provided therein (not shown in the drawings). The reinforcing layers of these Example tires and Conventional Example tires are formed of steel cords each having characteristics as shown in Table 1.

The Example tires and Conventional Example tires were assemble with rims of predetermined size as shown in Table 1, to be made as tire wheels. These tire wheels were mounted to a test vehicle and evaluated, while various conditions including the tire internal pressure (expressed as a relative pressure), tire load weight and the like as shown in Table 1 were applied thereto, by measuring a running distance of each tire attained before generation of cracks occurred therein.

The evaluation results of the tests are shown in Table 1. The evaluation results in Table 1 are expressed as index ratios with respect to the running distances attained before cracks were generated in the corresponding tires of Conventional Examples, which running distances of the Conventional Example tires being converted to 100, respectively. The larger evaluation values indicate the better performances.

**Table 1**

| | Fig. | Tire size | Rim size | Cord diameter of Reinforcing layer | Room temperature | Internal pressure | Tire Load weight | Running speed | Evaluation |
|---|---|---|---|---|---|---|---|---|---|
| Example 1 | 2 | 11R22.5 | 8.25×22.5 | 1.8 mm | 45 °C | 700 kPa | 25 kN | 60 km/h | 125 |
| Example 2 | 3 | 11 R22.5 | 8.25×22.5 | 1.1 mm | 45 °C | 700 kPa | 25 kN | 60 km/h | 130 |
| Example 3 | 4 | 295/75R22.5 | 8.25×22.5 | 1.1 mm | 45 °C | 660 kPa | 25 kN | 60 km/h | 123 |
| Example 4 | 5 | 435/45R22.5 | 14×22.5 | 1.8 mm | 45 °C | 900 kPa | 50 kN | 60 km/h | 120 |
| Example 5 | 9 | 1000R20 | 7.50×22.5 | 1.1 mm | 45 °C | 725 kPa | 27 kN | 60 km/h | 128 |
| Example 6 | 10 | 59/80R63 | 44x63 | 2.3 mm | 40 °C | 600 kPa | 1016 kN | 15 km/h | 130 |

As shown by the results in Table 1, the running distances attained before generation of cracks at the bead portions of the Example tires were increased by 20 to 30%, respectively, as compared with the corresponding tires of Conventional Examples. Accordingly, it is understood that preventing a carcass from being separated from rubber and also preventing the carcass from being pulled out of a bead portion make significant contributions to improving duration of the bead portion.

### Industrial Applicability

As is obvious from the results described above, there can be obtained a pneumatic tire in which the structure of a reinforcing layer is optimized to prevent a carcass from being separated from rubber and reliably prevent the carcass from being pulled out of a bead portion, to improve durability of the bead portion.

## Claims

1. A pneumatic tire having a carcass (5) formed of at least one ply constituted of a main body (3) extending in a toroidal shape over respective portions including a pair of bead portions (1) having bead cores (2) embedded therein, a pair of sidewall portions extending on the outer side in the tire radial direction from the bead portions, and a tread portion extending over the respective sidewall portions; and a folded portion (4) extending from the main body and being folded around the respective bead cores from the inner side toward the outer side in the tire widthwise direction, **characterized by**
at least two reinforcing layers (8) formed of cords (7) extending substantially in the tire circumferential direction and rubber coating thereon, the reinforcing layers being disposed along the inner face of the carcass on the inner side in the tire widthwise direction of the bead core.

2. The pneumatic tire of claim 1, wherein the cords constituting the reinforcing layers are preferably metal cords or organic fiber cords.

3. The pneumatic tire of claim 1 or 2, wherein the end portion on the outer side in the tire radial direction of each reinforcing layer is positioned on the outer side in the tire radical direction of the outermost end in the tire radial direction of the bead core.

4. The pneumatic tire of any of claims 1 to 3, wherein the end portion on the inner side in the tire radial direction of each reinforcing layer is positioned on the inner side in the tire radial direction of the innermost end in the tire radial direction of the bead core.

5. The pneumatic tire of any of claims 1 to 4, wherein reinforcing layer passes on a position on the inner side in the tire radial direction of the bead core.

6. The pneumatic tire of any of claims 1 to 5, wherein a folded end (6) of the folded portion is preferably distanced from the bead core.

7. The pneumatic tire of any of claims 1 to 6, wherein the entire part of the folded portion of the carcass is folded along the bead core.

8. The pneumatic tire of claim 7, wherein the entire part of the folded portion of the carcass is plastically folded.

9. The pneumatic tire of any of claims 1 to 8, wherein the adjacent two reinforcing layers are disposed such that the two reinforcing layers are offset with each other.

10. The pneumatic tire of any of claims 1 to 9, wherein the driving density of cords in each reinforcing layer is relatively small at the end portion on the outer side in the tire radial direction thereof, as compared with the cord driving density at other portions of the reinforcing layer.

11. The pneumatic tire of any of claims 1 to 10, wherein the driving density of cords in the reinforcing layer gradually increases from the end portion on the outer side in the radial direction of the reinforcing layers toward a position on the inner side in the tire widthwise direction at the innermost end in the tire widthwise direction of the bead core.

12. The pneumatic tire of any of claims 1 to 11, wherein the reinforcing layer is provided such that two reinforcing layers are disposed in a section where the bead core is present, while a single reinforcing layer is disposed in other sections.

## Patentansprüche

1. Luftreifen mit einer Karkasse (5), die aus mindestens einer Lage gebildet wird, die besteht aus: einem Hauptkörper (3), der sich in einer Ringform über die jeweiligen Abschnitte erstreckt, die umfassen: ein Paar Wulstabschnitte (1) mit darin eingebetteten Wulstkernen (2); ein Paar Seitenwandabschnitte, die sich auf der Außenseite in der radialen Reifenrichtung von den Wulstabschnitten aus erstrecken; und einen Laufflächenabschnitt, der sich über die jeweiligen Seitenwandabschnitte erstreckt; und einem gefalteten Abschnitt (4), der sich vom Hauptkörper aus erstreckt und um die jeweiligen Wulstkerne von der Innenseite in Richtung der Außenseite in der Reifenbreitenrichtung gefaltet wird, **gekennzeichnet durch**
mindestens zwei Verstärkungslagen (8), die aus Korden (7) gebildet werden, die sich im Wesentlichen in der Umfangsrichtung des Reifens erstrecken, und eine Gummibeschichtung darauf haben, wobei die Verstärkungslagen längs der Innenfläche der Karkasse auf der Innenseite in der Reifenbreitenrichtung des Wulstkernes angeordnet sind.

2. Luftreifen nach Anspruch 1, bei dem die Korde, die die Verstärkungslagen bilden, vorzugsweise Metallkorde oder Korde aus organischen Fasern sind.

3. Luftreifen nach Anspruch 1 oder 2, bei dem der Endabschnitt auf der Außenseite in der radialen Reifenrichtung einer jeden Verstärkungslage auf der Außenseite in der radialen Reifenrichtung des äußersten Endes in der radialen Reifenrichtung des Wulstkernes positioniert ist.

4. Luftreifen nach einem der Ansprüche 1 bis 3, bei dem der Endabschnitt auf der Innenseite in der radialen Reifenrichtung einer jeden Verstärkungslage auf der Innenseite in der radialen Reifenrichtung des innersten Endes in der radialen Reifenrichtung des Wulstkernes positioniert ist.

5. Luftreifen nach einem der Ansprüche 1 bis 4, bei dem die Verstärkungslage eine Position auf der Innenseite in der radialen Reifenrichtung des Wulstkernes passiert.

6. Luftreifen nach einem der Ansprüche 1 bis 5, bei dem ein gefaltetes Ende (6) des gefalteten Abschnittes vorzugsweise vom Wulstkern beabstandet ist.

7. Luftreifen nach einem der Ansprüche 1 bis 6, bei dem der gesamte Teil des gefalteten Abschnittes der Karkasse längs des Wulstkernes gefaltet ist.

8. Luftreifen nach Anspruch 7, bei dem der gesamte Teil des gefalteten Abschnittes der Karkasse plastisch gefaltet ist.

9. Luftreifen nach einem der Ansprüche 1 bis 8, bei dem die benachbarten zwei Verstärkungslagen so angeordnet sind, dass die zwei Verstärkungslagen miteinander versetzt sind.

10. Luftreifen nach einem der Ansprüche 1 bis 9, bei dem die Bewegungsdichte der Korde in jeder Verstärkungslage am Endabschnitt auf der Außenseite in der radialen Reifenrichtung davon relativ klein ist, verglichen mit der Bewegungsdichte der Korde in anderen Abschnitten der Verstärkungslage.

11. Luftreifen nach einem der Ansprüche 1 bis 10, bei dem die Bewegungsdichte der Korde in der Verstärkungslage nach und nach vom Endabschnitt auf der Außenseite in der radialen Richtung der Verstärkungslagen in Richtung einer Position auf der Innenseite in der Reifenbreitenrichtung am innersten Ende in der Reifenbreitenrichtung des Wulstkernes größer wird.

12. Luftreifen nach einem der Ansprüche 1 bis 11, bei dem die Verstärkungslage so bereitgestellt wird, dass zwei Verstärkungslagen in einem Abschnitt angeordnet sind, wo der Wulstkern vorhanden ist, während eine einzelne Verstärkungslage in anderen Abschnitten angeordnet wird.

## Revendications

1. Bandage pneumatique, comportant une carcasse (5) comprenant au moins une nappe constituée de : un corps principal (3), s'étendant dans une forme toroïdale au-dessus de parties respectives, englobant une paire de parties de talon (1) comportant des tringles (2) qui y sont noyées, une paire de parties de flanc s'étendant vers l'autre côté dans la direction radiale du bandage pneumatique à partir des parties de talon, et une partie de bande de roulement, s'étendant au-dessus de parties de flanc respectives ; et une partie repliée (4), s'étendant à partir du corps principal et étant repliée autour des tringles respectives, du côté interne vers le côté externe, dans la direction de la largeur du bandage pneumatique, **caractérisé par**
au moins deux couches de renforcement (8), composées de câblés (7) s'étendant pratiquement dans la direction circonférentielle du bandage pneumatique et ayant un revêtement de caoutchouc sur ceux-ci, les couches de renforcement étant agencées le long de la face interne de la carcasse sur le côté interne de la tringle, dans la direction de la largeur du bandage pneumatique.

2. Bandage pneumatique selon la revendication 1, dans lequel les câblés constituant les couches de renforcement sont de préférence des câblés métalliques ou des câblés de fibres organiques.

3. Bandage pneumatique selon les revendications 1 ou 2, dans lequel la partie d'extrémité sur le côté externe, dans la direction radiale du bandage pneumatique, de chaque couche de renforcement est positionnée sur le côté externe, dans la direction radiale du bandage pneumatique, de l'extrémité externe extrême de la tringle, dans la direction radiale du bandage pneumatique.

4. Bandage pneumatique selon l'une quelconque des revendications 1 à 3, dans lequel la partie d'extrémité sur le côté interne, dans la direction radiale du bandage pneumatique, de chaque couche de renforcement est positionnée sur le côté interne, dans la direction radiale du bandage pneumatique, de l'extrémité interne extrême de la tringle, dans la direction radiale du bandage pneumatique.

5. Bandage pneumatique selon l'une quelconque des revendications 1 à 4, dans lequel la couche de renforcement passe sur une position sur le côté interne de la tringle, dans la direction radiale du bandage pneumatique.

6. Bandage pneumatique selon l'une quelconque des revendications 1 à 5, dans lequel une extrémité repliée (6) de la partie repliée est de préférence espacée de la tringle.

7. Bandage pneumatique selon l'une quelconque des revendications 1 à 6, dans lequel la partie entière de la partie repliée de la carcasse est repliée le long de la tringle.

8. Bandage pneumatique selon la revendication 7, dans lequel la partie entière de la partie repliée de la carcasse est repliée de manière plastique.

9. Bandage pneumatique selon l'une quelconque des revendications 1 à 8, dans lequel les deux couches de renforcement adjacentes sont agencées de sorte que les deux couches de renforcement sont décalées l'une par rapport à l'autre.

10. Bandage pneumatique selon l'une quelconque des revendications 1 à 9, dans lequel la densité d'entraînement des câblés dans chaque couche de renforcement est relativement réduite au niveau de la partie d'extrémité sur le côté externe, dans la direction radiale du bandage pneumatique, par rapport à la densité d'entraînement des câblés au niveau d'autres parties de la couche de renforcement.

11. Bandage pneumatique selon l'une quelconque des revendications 1 à 10, dans lequel la densité d'entraînement des câblés dans la couche de renforcement est progressivement accrue de la partie d'extrémité sur le côté externe, dans la direction radiale des couches de renforcement, vers une position sur le côté interne, dans la direction radiale du bandage pneumatique, au niveau de l'extrémité interne extrême de la tringle, dans la direction de la largeur du bandage pneumatique.

12. Bandage pneumatique selon l'une quelconque des revendications 1 à 11, dans lequel la couche de renforcement est agencée de sorte que deux couches de renforcement sont positionnées dans une section où la tringle est présente, une seule couche de renforcement étant positionnée dans d'autres sections.
